# EUROPÄISCHE PATENTSCHRIFT

(11) **EP 2 032 936 B1**
(45) Veröffentlichungstag und Bekanntmachung des Hinweises auf die Patenterteilung: **16.02.2011**
(21) Anmeldenummer: 07785547.6
(22) Anmeldetag: 25.06.2007
(51) Int. Cl.: G01B 5/255

(54) **VERFAHREN UND VORRICHTUNG ZUM EINSTELLEN DES LENKRADES VON KRAFTFAHRZEUGEN**
METHOD AND DEVICE FOR ADJUSTING THE STEERING WHEEL OF A MOTOR VEHICLE
PROCÉDÉ ET DISPOSITIF DE RÉGLAGE DU VOLANT D'UN VÉHICULE À MOTEUR

(30) Priorität: 28.06.2006 DE 102006030066; 06.07.2006 DE 102006031601
(43) Veröffentlichungstag der Anmeldung: 11.03.2009
(73) Patentinhaber: Dürr Assembly Products GmbH, 66346 Püttlingen (DE)
(72) Erfinder: TENTRUP, Thomas, 66333 Merzig-Mechern (DE); DEUTSCH, Andre, 67260 Herbitzheim (FR); MEYERS, Christoph, 66679 Losheim am See (DE)
(74) Vertreter: Vièl, Georg
(86) Internationale Anmeldenummer: PCT/DE2007/001113
(87) Internationale Veröffentlichungsnummer: WO 2008/000229

(56) Entgegenhaltungen:
- EP-A- 0 329 059
- EP-A- 1 186 857
- WO-A-00/60308
- DE-A1- 10 016 366
- DE-A1- 10 356 290
- DE-U1- 7 827 646
- DE-U1- 29 906 813
- FR-A- 2 263 500
- US-A- 4 393 694
- US-A- 4 893 413

## Beschreibung

Die Erfindung betrifft ein Verfahren und eine Vorrichtung zum Einstellen des Lenkrades von Kraftfahrzeugen.

An gängigen Fahrwerkgeometrieprüfständen kann das Lenkrad manuell durch Werker in der Lenkradspielmitte eingestellt werden. Diese Einstellung erfolgt durch sogenanntes «Einpendeln» des Lenkrades, d.h. es werden durch den Werker Lenkbewegungen vorgenommen mit dem Ziel das Lenkrad möglichst genau in der Lenkradspielmitte einzustellen. Da diese Art der Einstellung subjektiv ist und eine bestimmte Erfahrung des Werkers voraussetzt, ergeben sich über die Produktion Schwankungen bezüglich dieser Einstellung. Auch die Lenkhysteresemessung und das nachfolgende Einstellen des Lenkrades in Hysteresemitte wird bisher allenfalls manuell durch einen Werker vorgenommen, wobei sich entsprechende Probleme ergeben.

Weiterhin ist es bekannt, durch Roboter, die durch die geöffnete Fahrzeugscheibe das Lenkrad greifen, die oben genannten Einstellungen vorzunehmen. Diese Vorgehensweise ist jedoch sehr platz- und kostenaufwendig.

Daneben wird das Lenkrad oft unter Benutzung einer Lenkradwaage eingestellt, siehe z.B. in DE 29906813U1, DE 10356290 A1, US 4893413 A und US 4393694. Aus der FR 2 263 500 A ist eine Kontrollvorrichtung für Kraftfahrzeuge bekannt, mit der unter anderem auch die Fahrwerksgeometrie kontrolliert werden kann.

Die WO 00/60308 A1 beschreibt ein Verfahren zur Einstellung der Achsengeometrie eines Fahrzeuges, wobei das Fahrwerk in eine Leergewichtslage eingefahren und mindestens ein Rad in Drehung versetzt wird. Mit einem weiteren Meßwert kann eine Schrägstellung des Lenkrades erfaßt und berücksichtigt werden.

Eine Vorrichtung zur Ermittlung der relativen Beweglichkeit zwischen Teilen des Fahrwerks oder der Lenkung des Fahrzeuges, insbesondere zur Ermittlung des Spiels zwischen Teilen der Radaufhängung und der Lenkung bei einem Kraftwagen ist aus der DE 78 27 646 U1 bekannt. Die EP 329 059 A1 beschreibt ein Verfahren zur Eliminierung des Einflusses des Lenkungsspiels auf die Messung bzw. Einstellung der Vorderradeinzelspur bei Kraftfahrzeugen sowie eine Vorrichtung zur Durchführung des Verfahrens.

Bei dem in der EP 1 186 857 A2 beschriebenen Verfahren zur programmgesteuerten Fahrwerkvermessung bei Kraftfahrzeugen werden einzelne Schritte oder Gruppen von Schritten des Meßverfahrens unter der Steuerung eines zentralen Rechners für die Fahrwerkvermessung oder eines Mikroprozessors in einer maschinellen Einrichtung zum Einschlagen der Räder der lenkbaren Achse des Fahrzeuges durchgeführt. Die Räder einer lenkbaren Achse werden programmgesteuert in die zur Durchführung der Fahrwerkvermessung erforderlichen Positionen eingeschlagen bzw. ausgerichtet.

Aufgabe der Erfindung ist es daher, es zu ermöglichen, einfach, schnell und kostengünstig eine automatische Einstellung des Lenkrades in der Lenkspielmitte durch « Einpendeln » bzw. eine Lenkhysteresemessung sowie die nachfolgende Einstellung des Lenkrades vorzunehmen.

Diese Aufgabe wird erfindungsgemäß durch ein Verfahren zum Einstellen des Lenkrades von Kraftfahrzeugen in der Lenkradspielmitte, mit folgenden Verfahrensschritten:
➢ Drehen mindestens einer von zwei Schwimmplatten eines Fahrwerkgeometrieprüfstandes, auf denen die Vorderräder des Kraftfahrzeuges angeordnet sind, bei stehenden Vorderrädern, wobei eine Lenkraddrehung induziert wird,
➢ Bestimmen des Lenkradwinkels in Abhängigkeit von der induzierten Lenkradbewegung,
   und
➢ Einstellen der Lenkradspielmitte.

Im Rahmen der Erfindung hat sich überraschend herausgestellt, daß es nicht nur möglich ist, über das Lenkrad Drehbewegungen der Räder auf den Schwimmplatten des Fahrzeuggeometrieprüfstandes zu induzieren, sondern auch in umgekehrter Richtung über mindestens eine der beiden Schwimmplatten des Fahrwerkgeometrieprüfstandes reproduzierbare Lenkraddrehungen zu induzieren. Dies ermöglicht es, ohne großen apparativen Zusatzaufwand (wie beispielsweise die oben beschriebenen Roboter) eine automatisierbare Einstellung des Lenkrades in Lenkradspiebnitte vorzunehmen. Soweit es möglich ist, auch die jeweilige Position des Rades im Raum zu erfassen, können im Rahmen dieser Messungen parallel der Nachlaufwinkel und die Spreizung bestimmt werden.

Eine Ausbildung der Erfindung besteht darin, daß das Einstellen der Lenkradspielmitte durch ein automatisiertes Einpendeln des Lenkrades erfolgt.

Es hat sich herausgestellt, daß es möglich ist, über die Schwimmplatten ein Einpendeln des Lenkrades vorzunehmen.

Eine andere Ausbildung der Erfindung besteht darin, daß das Einstellen der Lenkradspielmitte durch Ermitteln der Lenkradhysterese und nachfolgendem Einstellen des Lenkrades in Hysteresemitte erfolgt.

Ebenso ist im Rahmen der Erfindung festgestellt worden, daß auf diese Weise die Lenkradhysterese ermittelt und das Lenkrad in Hysteresemitte eingestellt werden kann.

Erfindungsgemäß ist vorgesehen, daß der Lenkradwinkel über eine Lenkradwaage oder den Lenkwinkelsensor des Fahrzeuges bestimmt wird.

Eine hierfür geeignete Lenkradwaage ist in der nachveröffentlichten deutschen Patentschrift mit dem Aktenzeichen DE 10 2005 042 446 B3 (entspricht EP 176 0 421 A2) bekannt. Es ist aber auch möglich, den Lenkradwinkel über den Lenkwinkelsensor des Fahrzeuges zu bestimmen.

Eine Weiterbildung der Erfindung besteht in folgenden weiteren Verfahrensschritten :
➢ Drehen mindestens einer der beiden Schwimmplatten des Fahrwerkgeometrieprüfstandes, auf denen die Vorderräder des Kraftfahrzeuges angeordnet sind, bei stehenden Rädern, um mindestens drei unterschiedliche Lenkradpositionen zu induzieren und Durchführen einer Umschlagmessung bei drehenden Rädern auf jeder der Lenkradpositionen,
➢ Bestimmen des Nachlaufwinkels des Kraftfahrzeuges mittels eines geeigneten mathematischen Verfahrens.

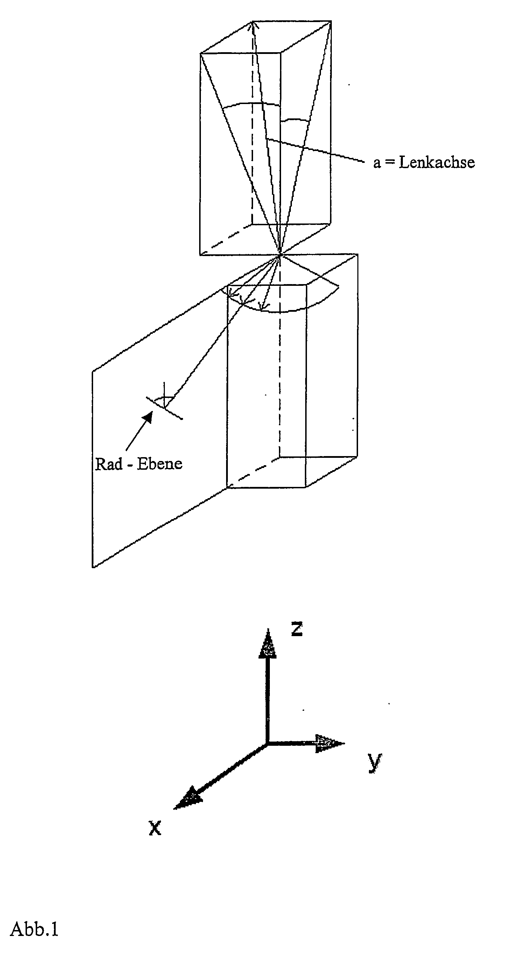

Im Rahmen des erfindungsgemäßen Verfahrens kann nämlich mit Hilfe der Adapterplatten, die die Stellung des Rades im Raum abbilden und eine dieser Stellung im Raum entsprechende ebene Meßfläche ausbilden beispielsweise mit Lasertriangulationssensoren der Nachlaufwinkel des Kraftfahrzeuges bestimmt werden. Der Nachlaufwinkel φ ist der Winkel, den die Projektion der Lenkachse des Rades in der Fahrzeuglängsebene (x,z-Ebene) und die Senkrechte (z-Achse) bilden (siehe Fig. 1). Der Nachlaufwinkel ist positiv, wenn die Lenkachse oben entgegen der Fahrtrichtung (x-Richtung) geneigt ist.

Das Verfahren kann auch durch folgende weitere Verfahrensschritte weitergebildet werden:
➢ Aufbringen von Adapterplatten auf die Räder des KraRfahrzeuges, wobei die Adapterplatten an der vertikalen Außenseite der Räder eine ebene Meßfläche ausbilden,
➢ Drehen mindestens einer der beiden Schwimmplatten des Fahrzeuggeometrieprüfstandes, auf denen die Vorderräder des Kraftfahrzeuges angeordnet sind, bei stehenden Rädern, um eine LealQaddrehung zu induzieren,
➢ Bestimmen des Nachlaufwinkels und der Spreizung des Kraftfahrzeuges mittels eines geeigneten mathematischen Verfahrens.

Die Spreizung θ ist der Winkel, den die Projektion der Lenkachse des Rades in der Fahrzeugquerebene (y,z-Ebene) und die Senkrechte (z-Achse) bilden (siehe Fig. 1). Die Spreizung ist positiv, wenn die Lenkachse oben zur Fahrzeugmitte geneigt ist.

Im Rahmen der Erfindung liegt auch eine Vorrichtung zum Durchführen des erfindungsgemäßen Verfahrens, mit einem Fahwerkgeometrieprüfstand, der an der Vorderachse des Kraftfahrzeuges pro Rad je eine Schwimmplatte als Radaufnahmen aufweist, die beide in den Funktionszustand "geführt" bringbar sind, in dem die Schwimmplatte um einen variablen Drehpunkt vorne rotieren kann, und wobei nur eine der beiden Schwimmplatten in den Funktionszustand "gelenkt" bringbar ist, in dem die Schwimmplatte definiert gedreht werden kann und wobei die Vorrichtung Mittel zum Durchführen einer Oszillationsbewegung der gelenkten und geführten Schwimmplatte aufweist.

Es ist also ein Fahrwerkgeometrieprüfstand vorgesehen, der Schwimmplatten als Radaufnahmen aufweist, wobei Mittel zum definierten Drehen mindestens einer der beiden Schwimmplatten, vorzugsweise um einen Winkel von 10° bis zu 45°, vorgesehen sind.

Durch eine mit relativ geringem Aufwand zu erreichenden Erhöhung der Drehbarkeit der Schwimmplatten wird es ermöglicht, die Einstellung des Lenkrades in Lenkradspielmitte durchzuführen.

Erfindungsgemäß ist vorgesehen, daß Mittel zum Messen der Drehung der gelenkten und geführten Schwimmplatte vorgesehen sind.

Diese Mittel können beispielsweise als Steuerprogramm für die Drehbewegung der gelenkten und geführten Schwimmplatte ausgebildet sein.

Zusätzlich ist es zweckmäßig, daß eine Auswerteeinheit zum Einstellen der Lenkradspielmitte und/oder des Nachlaufs vorgesehen ist.

Mit dieser Auswerteeinheit ist es möglich, die automatische Einstellung des Lenkrades in Lenkradspielmitte durchzuführen.

Im Rahmen der Erfindung liegt auch eine erfindungsgeniäße Vorrichtung, wobei Adapterplatten zum Ausbilden einer ebenen Meßfläche an der vertikalen Außenseite der Räder des Kraftfahrzeuges vorgesehen sind.

Diese Adapterplatten können sehr schnell auf das Rad aufgebracht und wieder von dem Rad entfernt werden und dienen dazu, eine ebene Meßfläche auszubilden, die die jeweilige Stellung des Rades wiedergibt. Diese jeweilige Stellung des Rades kann über eine Mehrpunktmessung auf die Meßfläche der Adapterplatte schnell und korrekt bestimmt werden.

Nachfolgend wird die Erfindung näher anhand von Zeichnungen erläutert.

Es zeigen
- Fig. 1: eine Darstellung des Nachlaufwinkels,
- Fig. 2: das Pendeln über eine Schwimmplatte bei abnehmender Amplitude.
- Fig. 3: eine Adapterplatte,
- Fig. 4: die Bestimmung von Nachlaufwinkel und Spreizung,
- Fig. 5: eine erfindungsgemäße Vorrichtung zur Positionierung der Räder eines Kraftfahrzeuges,
- Fig. 6: eine schematische Darstellung eines Kraftfahrzeuges auf einem erfindungsgemäßen Fahrwerkgeometrieprüfstand.

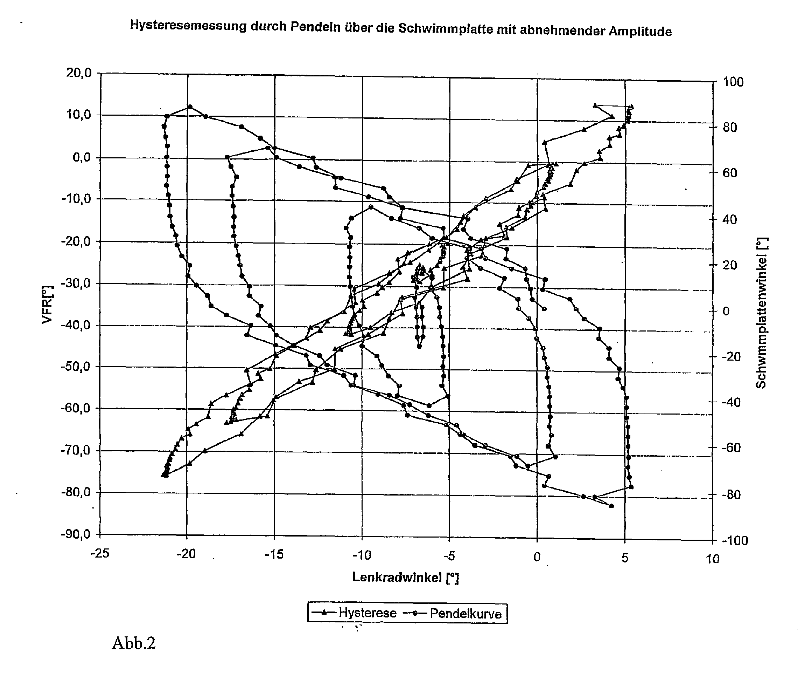

In Fig. 2 ist einerseits die Schwimmplattendrehung (rechte Ordinate) gegen den Lenkradwinkel und andererseits die Vorderachsfahrtrichtung (linke Ordinate) gegen den Lenkradwinkel aufgetragen. Es lässt sich leicht erkennen, dass das Lenkrad am Ende des Einpendels in der Lenkradspielmitte steht.

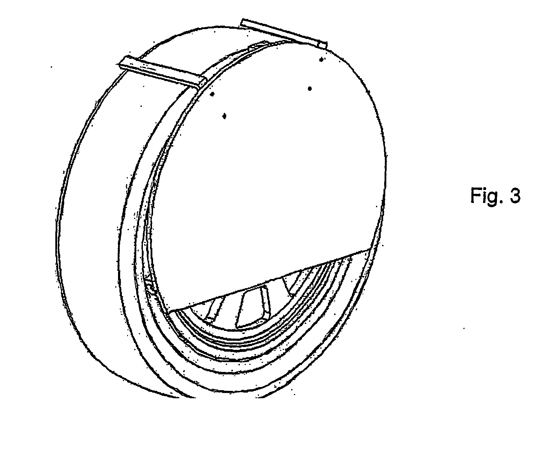

Fig. 3 zeigt eine der Adapterplatten, die schnell und einfach auf die Räder aufgebracht werden können, um den Nachlaufwinkel (hier : innerhalb eines Bereiches von ca +/- 20°) zu bestimmen.

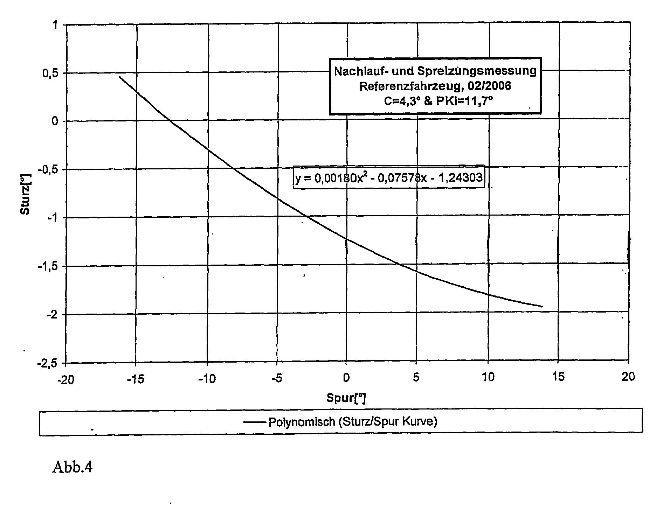

Fig. 4 zeigt schließlich die Bestimmung von Nachlaufwinkel (Caster Inclination) und Spreizung (King Pin Inclination) in Abhängigkeit von Spur (Toe) und Sturz (Camber), die mittels Lasermessung auf die Adapterplatte ermittelt werden können.

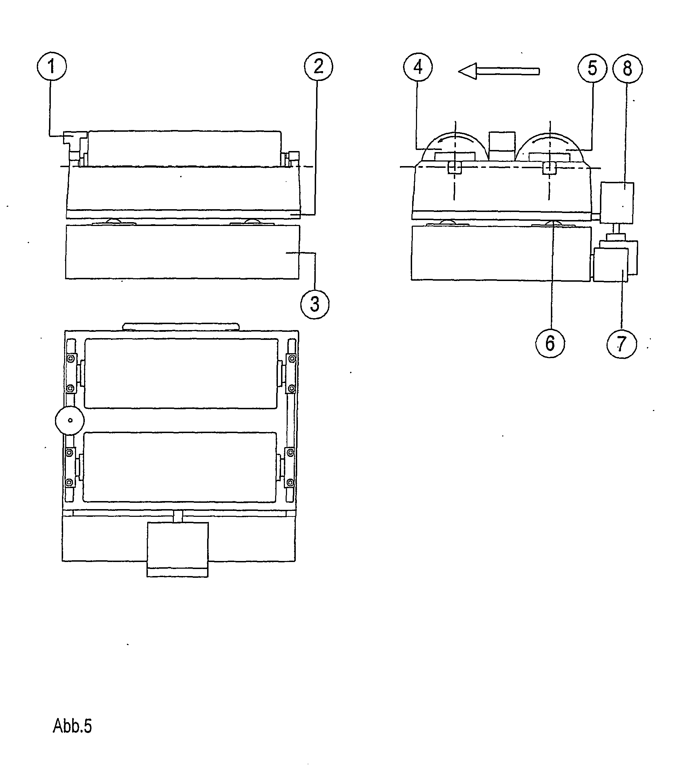

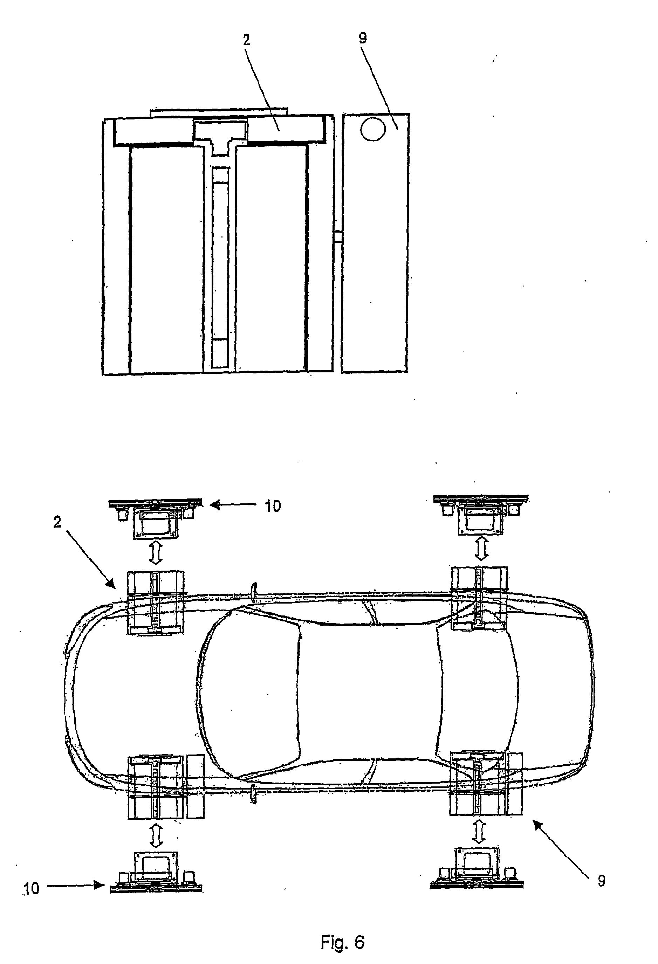

Ein Verfahren zur Positionierung eines Fahrzeugs auf einem Fahrwerkstand zur Messung bzw. Messung und Einstellung der Geometrie der Radachsen von Rädern eines Fahrzeuges sowie eine Vorrichtung zur Durchführung des Verfahrens ist aus DE 100 16 366 C2 bekannt und werden zum Positionieren des Kraftfahrzeugs auf dem Fahrwerkstand genutzt. Die dort beschriebenen Radaufnahmen bestehen aus Schwimmplatten und Rollen, die das Rad um seine Achse drehen. Im vorliegenden Fall werden nur die Schwimmplatten betrachtet, da das Drehen der Schwimmplatte nur erfolgt, wenn das Rad steht. Die Schwimmplatten haben drei Freiheitsgrade: Zwei translatorische x,y in der Horizontalen und ein rotatorischen um die Vertikale. Alle Freiheitsgrade sind in Bezug zur Meßaufgabe geeignet limitiert (z.B. 10°- bzw. 45°-Schwimmplatte). Wie in Fig. 5 dargestellt (Pfeil weist in Fahrtrichtung), weist eine Vorrichtung zum Positionieren eines Rades eines Kraftfahrzeuges eine Schwimmplatte 2 auf, die mittels eines Lagers 6 auf einer Basis 3 angeordnet ist und eine freie Rolle 4 sowie eine angetriebene Rolle 5 aufweist. Weiterhin sind ein elektrischer Servomotor 7 und eine Befestigung 8 vorgesehen. Alle vier Schwimmplatten 2 eines Fahrwerkgeometrieprüfstandes (Fig. 6), haben zumindest folgende Funktionsmöglichkeiten: 1. **geklemmt,** d.h. die Schwimmplatte ist fixiert und in x-Richtung ausgerichtet, 2. **geführt,** d.h. die Schwimmplatte kann um einen variablen Drehpunkt (z.B. Langloch) vorne rotieren, 3. **frei,** d.h. die Schwimmplatte kann sich ohne Drehpunkt frei in den drei Freiheitsgraden bewegen und 4. **gebremst,** d.h. die Schwimmplatte wird in der momentanen Position fixiert.

Auf einer Seite (links oder rechts) erhalten die Schwimmplatten vorne und hinten noch eine zusätzliche 5. Funktionsmöglichkeit: 5. **gelenkt,** d.h. durch einen zusätzlichen, hinten an der Schwimmplatte angebrachten linearen Aktor 9 (z.B. Linearführung mit Servomotor) inklusive eines Meßsystems 10 zum Messen der Verfahrstrecke kann die Schwimmplatte 2 definiert gedreht werden.

Zum Drehen der vorderen Räder um die Vertikale sind folgende Funktionsmöglichkeiten der Schwimmplatten eingestellt:
Schwimmplatten hinten links und rechts: geklemmt oder gebremst
Schwimmplatte vorne rechts: geführt und gelenkt
Schwimmplatte vorne links: geführt

Über den Aktor vorne rechts kann nun die Drehung der Vorderräder um die Vertikale erfolgen.

## Patentansprüche

1. Verfahren zum Einstellen des Lenkrades von Kraftfahrzeugen in der Lenkradspielmitte, mit folgenden Verfahrensschritten.
➢ Drehen mindestens einer von zwei Schwimmplatten eines Fahrwerkgeometrieprüfstandes, auf denen die Vorderräder des Kraftfahrzeuges angeordnet sind, bei stehenden Vorderrädern, wobei eine Lenkraddrehung induziert wird,
➢ Bestimmen des Lenkradwinkels in Abhängigkeit von der induzierten Lenkradbewegung, und
➢ Einstellen der Lenkradspielmitte.

2. Verfahren gemäß Anspruch 1, wobei das Einstellen der Lenkradspielmitte durch ein automatisiertes Einpendeln des Lenkrades erfolgt.

3. Verfahren gemäß Anspruch 1, wobei das Einstellen der Lenkradspielnnitte durch Ermitteln der Lenkradhysterese und nachfolgendem Einstellen des Lenkrades in Hysteresemitte erfolgt.

4. Verfahren gemäß Anspruch 1, wobei der Lenkradwinkel über eine Lenkradwaage oder den Lenkwinkelsensor des Fahrzeuges bestimmt wird.

5. Verfahren gemäß Anspruch 1, mit folgenden weiteren Verfahrerisschritten:
➢ Drehen der Schwimmplatten des Fahrwerkgeometrieprüfstandes, auf denen die Vorderräder des Kraftfahrzeuges angeordnet sind, bei stehenden Rädern, um mindestens drei unterschiedliche Lenkradpositionen zu induzieren und Durchführen einer Umschlagmessung bei drehenden Rädern auf jeder der Lenkradpositionen
➢ Bestimmen des Nachlaufwinkels des Kraftfahrzeuges mittels eines geeigneten mathematischen Verfahrens.

6. Verfahren gemäß Anspruch 1, mit folgenden weiteren Verfahrensschritten:
➢ Aufbringen von Adapterplatten auf die Räder des Kraftfahrzeuges, wobei die Adapterplatten an der vertikalen Außenseite der Räder eine ebene Meßfläche ausbilden,
➢ Drehen der Schwimmplatten des Fahrzeuggeometrieprüfstandes, auf denen die Vorderräder des Kraftfahrzeuges angeordnet sind, bei stehenden Rädern, um eine Lenkraddrehung zu induzieren,
➢ Bestimmen des Nachlaufwinkels und der Spreizung des Kraftfahrzeuges mittels Parabelregression.

7. Vorrichtung zum Durchführen des Verfahrens gemäß den Ansprüchen 1 bis 6, mit einem Fahrwerkgeometrieprüfstand, der an der Vorderachse des Kraftfahrzeuges pro Rad je eine Schwimmplatte als Radaufnahmen aufweist, die beide in den Funktionszustand "geführt" bringbar sind, in dem die Schwimmplatte um einen variablen Drehpunkt vorne rotieren kann, und wobei nur eine der beiden Schwimmplatten in den Funktionszustand "gelenkt" bringbar ist, in dem die Schwimmplatte definiert gedreht werden kann und wobei die Vorrichtung Weiterhin Mittel zum Durchführen einer Oszillationsbewegung der gelenkten und geführten Schwimmplatte aufweist.

8. Vorrichtung gemäß Anspruch 7, mit Mitteln zum Messen der Drehung der gelenkten und geführten Schwimmplatte.

9. Vorrichtung gemäß einem der Ansprüche 7 oder 8, mit einer Auswerteeinheit zum Einstellen der Lenkradspielmitte und/oder des Nachlaufs.

10. Vorrichtung gemäß einem der Ansprüche 7 bis 9, mit Adapterplatten zum Ausbilden einer ebenen Meßfläche an der vertikalen Außenseite der Räder des Kraftfahrzeuges.

## Claims

1. Method of centering the steering wheel of motor vehicles, involving the following steps:
➢ Rotation of at least one of two of a chassis-geometry test rig's floating plates, on which the front wheels of the motor vehicle are disposed, while the front wheels are stationary, the steering wheel thereby being made to rotate,
➢ Determination of the steering-wheel angle as a function of the induced steering-wheel movement, and
➢ Centering of the steering wheel

2. Method according to claim 1, the steering wheel being centred by way of automated stabilisation of the steering wheel.

3. Method according to claim 1, the steering wheel being centred by determining the steering-wheel hysteresis and subsequently adjusting the steering wheel to the centre of hysteresis.

4. Method according to claim 1, the steering-wheel angle being determined via a steering-wheel balance or the vehicle's steering-angle sensor.

5. Method according to claim 1, involving the following additional steps:
➢ Rotation of the chassis-geometry test rig's floating plates, on which the front wheels of the motor vehicle are disposed, while the wheels are stationary, so as to induce at least three different steering-wheel positions, and performance of a measurement over one wheel revolution at each of the steering-wheel positions while the wheels are turning, and
➢ Determination of the vehicle's caster inclination by means of a suitable mathematical process.

6. Method according to claim 1, involving the following additional steps:
➢ Attachment of adapter plates to the motor vehicle's wheels, the adapter plates creating a planar measuring surface on the vertical exterior of the wheels,
➢ Rotation of the vehicle-geometry test rig's floating plates, on which the front wheels of the motor vehicle are disposed, while the wheels are stationary, so as to induce rotation of the steering wheel, and
➢ Determination of the vehicle's caster inclination and king pin inclination by way of parabolic regression.

7. Device for carrying out the method according to claims 1 to 6, having a chassis-geometry test rig that is provided in the area of the motor vehicle's front axle with two floating plates, i.e. one to accommodate each wheel, where both floating plates can be "guided" into the functional state, in which the floating plate is able to rotate about a variable centre of rotation at the front, while only one of the two floating plates can be "steered" into the functional state, in which the floating plate can be rotated in a defined manner, said device also having means for carrying out an oscillating movement of the steered and guided floating plates.

8. Device according to claim 7, having means for measuring the rotation of the steered and guided floating plates.

9. Device according to one of the claims 7 or 8, having an evaluating unit for centering the steering wheel and/or adjusting the caster.

10. Device according to one of the claims 7 to 9, having adapter plates on the vertical exterior of the motor-vehicle's wheels to create a planar measuring surface.

## Revendications

1. Procédé pour le réglage du volant d'un véhicule automobile au centre du jeu de direction, avec les étapes de procédé suivantes :
- rotation d'au moins une des deux plaques flottantes d'un banc de contrôle de la géométrie de véhicules sur lequel sont disposées les roues avant du véhicule, roues à l'arrêt, ce qui provoque une rotation du volant,
- détermination de l'angle du volant en fonction du mouvement induit du volant, et
- réglage du centre du jeu de direction.

2. Procédé selon la revendication 1, dans lequel le réglage du centre du jeu de direction est réalisé par stabilisation automatique du volant.

3. Procédé selon la revendication 1, dans lequel le réglage du centre du jeu de direction est réalisé par détermination de l'hystérésis du volant et réglage consécutif du volant au centre de l'hystérésis.

4. Procédé selon la revendication 1, dans lequel l'angle du volant est déterminé au moyen d'une balance de volant ou du capteur d'angle de volant du véhicule.

5. Procédé selon la revendication 1, avec les étapes de procédé supplémentaires suivantes :
- rotation des plaques flottantes du banc de contrôle de la géométrie de véhicule sur lesquelles sont disposées les roues avant du véhicule, roues à l'arrêt, pour provoquer au moins trois positions différentes du volant et réalisation d'une mesure sur un tour de roue avec les roues en rotation sur chacune des positions du volant,
- détermination de l'angle de chasse du véhicule au moyen d'un procédé mathématique adéquat.

6. Procédé selon la revendication 1, avec les étapes de procédures supplémentaires suivantes :
- application de plaques d'adaptateur sur les roues du véhicule, lesdites plaques d'adaptateur formant sur la face externe verticale des roues une surface de mesure plane,
- rotation des plaques flottantes du banc de contrôle de la géométrie de véhicules sur lesquelles sont disposées les roues avant du véhicule, roues à l'arrêt, pour provoquer une rotation du volant,
- détermination de l'angle de chasse et de l'inclinaison des pivots de fusée du véhicule au moyen d'une régression parabolique.

7. Dispositif pour la mise en oeuvre du procédé selon l'une des revendications 1 à 6, avec un banc de contrôle de la géométrie de véhicules muni pour chaque roue de l'axe avant du véhicule d'une plaque flottante servant à recevoir la roue, les deux plaques flottantes pouvant être mises dans la position de fonctionnement « guidée » dans laquelle la plaque flottante peut pivoter à l'avant autour d'un point de pivotement variable, seule l'une des deux plaques flottantes pouvant être mise dans la position de fonctionnement « dirigée » dans laquelle la plaque flottante peut pivoter de façon définie, et le dispositif étant en outre muni de moyens pour réaliser un mouvement d'oscillation de la plaque flottante « guidée » et « dirigée ».

8. Dispositif selon la revendication 7, avec des moyens pour mesurer le pivotement de la plaque flottante « dirigée » et « guidée ».

9. Dispositif selon l'une des revendications 7 ou 8, avec une unité d'exploitation pour régler le centre du jeu de direction et/ou la chasse.

10. Dispositif selon l'une des revendications 7 à 9, avec des plaques d'adaptateur pour former une surface de mesure plane sur la face externe verticale des roues du véhicule.
